# EUROPEAN PATENT APPLICATION

(11) **EP 4 838 668 A2**
(43) Date of publication of application: **11.11.2026**
(21) Application number: 26206716.8
(22) Date of filing: 06.07.2022
(51) Int. Cl.: H01M 50/392

(54) **BATTERY CELL AND BATTERY MODULE COMPRISING SAME**

(30) Priority: 06.07.2021 KR 20210088728; 04.07.2022 KR 20220081996
(62) Document number(s) of the earlier application(s) in accordance with Art. 76 EPC: 22837983.0 / 4 231 429
(71) Applicant: LG Energy Solution, Ltd., Seoul 07335 (KR)
(72) Inventor: SONG, Dae-Woong, 34122 DAEJEON (KR); KIM, Sang-Hun, 34122 DAEJEON (KR); KANG, Min-Hyeong, 34122 DAEJEON (KR); YU, Hyung-Kyun, 34122 DAEJEON (KR); LIM, Hun-Hee, 34122 DAEJEON (KR); HWANG, Soo-Ji, 34122 DAEJEON (KR)
(74) Representative: Plasseraud IP

(57) **Abstract**

Disclosed is a battery cell, which includes a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein a gas discharge guiding unit is inserted in the lead film, the sealing portion includes a first sealing portion located on the gas discharge guiding unit and a second sealing portion located at both sides of the first sealing portion, and based on a protruding direction of the electrode lead, a width of the first sealing portion is smaller than a width of the second sealing portion.

## Description

### TECHNICAL FIELD

The present disclosure relates to a battery cell and a battery module including the same, and more particularly, to a battery cell with improved gas discharge performance, and a battery module including the same. The present application claims priority to Korean Patent Application No. 10-2021-0088728 filed on July 6, 2021 and Korean Patent Application No. 10-2022-0081996 filed on July 4, 2022 in the Republic of Korea, the disclosures of which are incorporated herein by reference.

### BACKGROUND ART

As technology development and demand for mobile devices increase, the demand for secondary batteries as an energy source is rapidly increasing. In particular, secondary batteries are of great interest as energy sources not only for mobile devices such as mobile phones, digital cameras, notebooks and wearable devices, but also for power devices such as electric bicycles, electric vehicles and hybrid electric vehicles.

Depending on the shape of a battery case, these secondary batteries are classified into a cylindrical battery and a prismatic battery in which an electrode assembly is included in a cylindrical or prismatic metal can, and a pouch-type battery in which the electrode assembly is included in a pouch-type case of an aluminum laminate sheet. Here, the electrode assembly included in the battery case is a power element including a positive electrode, a negative electrode, and a separator interposed between the positive electrode and the negative electrode, and capable of charging and discharging, and is classified into a jelly-roll type in which long sheet-type positive and negative electrodes coated with an active material are wound with a separator being interposed therebetween, and a stack type in which a plurality of positive and negative electrodes are sequentially stacked with a separator being interposed therebetween.

Among them, in particular, a pouch-type battery in which a stack-type or stack/folding-type electrode assembly is included in a pouch-type battery case made of an aluminum laminate sheet is being used more and more due to low manufacturing cost, small weight, and easy modification.

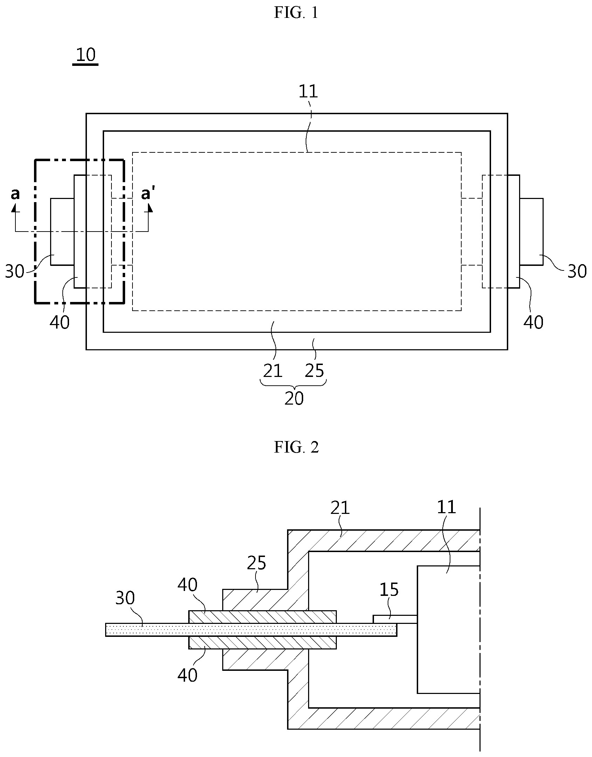

FIG. 1 is a top view showing a conventional battery cell. FIG. 2 is a cross-sectional view, taken along the axis a-a' of FIG. 1.

Referring to FIGS. 1 and 2, a conventional battery cell 10 includes a battery case 20 having an accommodation portion 21 in which an electrode assembly 11 is mounted, and a sealing portion 25 formed by sealing an outer periphery thereof. In addition, the battery cell 10 includes an electrode lead 30 electrically connected to an electrode tab 15 included in the electrode assembly 11 and protruding out of the battery case 20 via the sealing portion 25, and a lead film 40 is located between upper and lower portions of the electrode lead 30 and the sealing portion 25.

However, as the energy density of the battery cell increases in recent years, there is a problem that the amount of gas generated inside the battery cell also increases. In the case of the conventional battery cell 10, a component capable of discharging the gas generated inside the battery cell is not included, so a venting may occur to burst the battery case 20 due to gas generation in long-term storage. In addition, moisture may penetrate into the battery cell damaged by the venting, which may cause side reactions, and there is a problem that battery performance deteriorates and additional gas is generated. Accordingly, there is an increasing need to develop a battery cell with improved external emission of gas generated inside the battery cell.

### DISCLOSURE

### Technical Problem

The present disclosure is directed to providing a battery cell with improved gas discharge performance, and a battery module including the same.

The object to be solved by the present disclosure is not limited to the above-mentioned object, and the objects not mentioned here may be clearly understood by those skilled in the art from this specification and the accompanying drawings.

### Technical Solution

In one aspect of the present disclosure, there is provided a battery cell, comprising: a battery case having an accommodation portion in which an electrode assembly is mounted, and a sealing portion formed by sealing an outer periphery thereof; an electrode lead electrically connected to an electrode tab included in the electrode assembly and protruding out of the battery case via the sealing portion; and a lead film located at a portion corresponding to the sealing portion in at least one of an upper portion and a lower portion of the electrode lead, wherein a gas discharge guiding unit is inserted in the lead film, the sealing portion includes a first sealing portion located on the gas discharge guiding unit and a second sealing portion located at both sides of the first sealing portion, and based on a protruding direction of the electrode lead, a width of the first sealing portion is smaller than a width of the second sealing portion.

Based on a direction perpendicular to the protruding direction of the electrode lead, a length of the first sealing portion may be greater than a length of the gas discharge guiding unit.

The gas discharge guiding unit may be located at a center of the first sealing portion.

The first sealing portion may have a recessed pattern based on the second sealing portion.

The first sealing portion may have a pattern recessed toward an outer direction based on an inner side of the sealing portion.

An accommodation extending portion may be located between the first sealing portion and the accommodation portion.

Based on an outer side of the battery case, an end of the accommodation extending portion may be located outer than an end of the accommodation portion.

The gas discharge guiding unit may extend along a protruding direction of the electrode lead, and an end of the gas discharge guiding unit adjacent to an outer side of the battery case may be surrounded with the lead film.

An end of the gas discharge guiding unit adjacent to an inner side of the battery case may be exposed inside the battery case.

A gas discharge path may be formed at an interface between the gas discharge guiding unit and the lead film.

An adhesive force between the gas discharge guiding unit and the lead film may be smaller than an adhesive force between the lead film and the electrode lead or an adhesive force between the lead film and the sealing portion.

The gas discharge guiding unit may be a film layer made of at least one of polyimide and polyethylene terephthalate.

The gas discharge guiding unit may be a coating layer made of liquid resin.

The gas discharge guiding unit may further include a getter material containing at least one of calcium oxide (CaO), lithium chloride (LiCl), silica (SiO₂), barium oxide (BaO), barium (Ba), and calcium (Ca).

The gas discharge guiding unit may be located on the electrode lead, and an adhesive layer may be formed between the gas discharge guiding unit and the electrode lead.

An adhesive force between the gas discharge guiding unit and the lead film may be smaller than at least one of an adhesive force between the adhesive layer and the gas discharge guiding unit and an adhesive force between the adhesive layer and the electrode lead.

The adhesive layer may be made of an adhesive tape or an adhesive binder.

The lead film may have gas permeability of 20 Barrer to 60 Barrer at 60°C.

The lead film may have a moisture penetration amount of 0.02 g to 0.2 g for 10 years at 25°C, 50 %RH.

The gas discharge guiding unit may have gas permeability of 40 Barrer or more at 60°C.

In another aspect of the present disclosure, there is also provided a battery module, comprising the battery cell described above.

### Advantageous Effects

According to the embodiments, the present disclosure provides a battery cell in which a sealing portion positioned on a gas discharge guiding unit has a relatively small length, and a battery module including the same, thereby improving the gas discharge performance.

Specifically, according to one aspect of the present disclosure, a gas discharge path may be formed at the interface between the gas discharge guiding unit and the lead film, so that the gas in the battery cell may be effectively discharged to the outside, while securing a relatively easy manufacturing process.

According to another aspect of the present disclosure, the sealing portion includes a first sealing portion and a second sealing portion, and the first sealing portion and the second sealing portion have different widths to lower the sealing strength between the lead film and the sealing portion. Thus, when the internal pressure rises, the lead film may be easily peeled from the gas discharge guiding unit by the internal pressure, and a gas discharge path may be easily formed between the gas discharge guiding unit and the lead film.

According to still another aspect of the present disclosure, a portion that is not sealed by the first sealing portion may be formed on the lead film, and the corresponding portion may be in direct contact with the internal gas when the internal pressure rises. Therefore, the lead film may be more easily peeled off from the gas discharge guiding unit by the internal pressure.

According to another aspect of the present disclosure, by adjusting the shape of the gas discharge guiding unit, it is possible to control the gas discharge performance of the gas discharge guiding unit and durability and airtightness of the lead film. In addition, if necessary, by changing the shape of the gas discharge guiding unit, it is possible to simplify the manufacturing process and reduce the cost.

According to another aspect of the present disclosure, by setting the gas permeability and moisture penetration amount of the lead film within a predetermined range, it may be more effective to prevent moisture penetration from the outside while discharging the gas generated inside the battery cell.

The effect of the present disclosure is not limited to the above effects, and the effects not mentioned here will be clearly understood by those skilled in the art from this specification and the accompanying drawings.

### DESCRIPTION OF DRAWINGS

FIG. 1 is a top view showing a conventional battery cell.
FIG. 2 is a cross-sectional view, taken along the axis a-a' of FIG. 1.
FIG. 3 is a top view showing a battery cell according to an embodiment of the present disclosure.
FIG. 4(a) is an enlarged view showing a two-dot chain line region of FIG. 3, and FIG. 4(b) is an enlarged view showing the two-dot chain line region of FIG. 3 according to another embodiment of the present disclosure.
FIG. 5 is a cross-sectional view showing the battery cell of FIG. 4(a), taken along the axis A-A' of FIG. 3.
FIG. 6 shows various shapes of a gas discharge guiding unit.
FIG. 7 is an enlarged view showing a two-dot chain line region of FIG. 5.
FIGS. 8 and 9 are diagrams showing a gas discharge path formed at an interface between a lead film and the gas discharge guiding unit of FIG. 7.
FIG. 10 is a perspective view showing the gas discharge path of FIG. 9.
FIG. 11 is a cross-sectional view showing a battery cell according to another embodiment of the present disclosure, taken along the axis A-A' of FIG. 3.
FIG. 12 is an enlarged view showing a two-dot chain line region of FIG. 11.
FIGS. 13 and 14 are diagrams showing a gas discharge path formed at the interface between the lead film and the gas discharge guiding unit of FIG. 12.
FIG. 15 is an enlarged view showing the two-dot chain line region of FIG. 1 according to a comparative example.
FIG. 16 is a cross-sectional view, taken along the a-a' axis of FIG. 1 according to a comparative example.
FIG. 17 is an enlarged view showing the two-dot chain line region of FIG. 16.

### BEST MODE

Hereinafter, with reference to the accompanying drawings, various embodiments of the present disclosure will be described in detail so as to be easily implemented by those skilled in the art. The present disclosure may be implemented in various different forms and is not limited to the embodiments described herein.

In order to clearly explain the present disclosure, parts irrelevant to the description are omitted, and identical or similar components are endowed with the same reference signs throughout the specification.

In addition, since the size and thickness of each component shown in the drawings are arbitrarily expressed for convenience of description, the present disclosure is not necessarily limited to the drawings. In order to clearly express various layers and regions in the drawings, the thicknesses are enlarged. Also, in the drawings, for convenience of explanation, the thickness of some layers and regions is exaggerated.

In addition, throughout the specification, when a part "includes" a certain component, it means that other components may be further included, rather than excluding other components, unless otherwise stated.

In addition, throughout the specification, when referring to "top view", it means that the target part is viewed from above, and when referring to "cross-sectional view", it means that a vertically-cut section of the target part is viewed from a side.

Hereinafter, a battery cell according to an embodiment of the present disclosure will be described. However, here, the description will be made based on one end of the battery cell, but it is not necessarily limited thereto, and the same or similar contents may be described in the case of the other end of the battery cell.

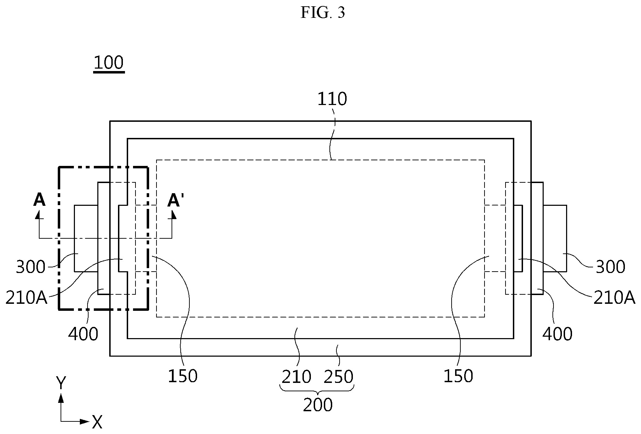

FIG. 3 is a top view showing a battery cell according to an embodiment of the present disclosure.

Referring to FIG. 3, the battery cell 100 according to an embodiment of the present disclosure includes a battery case 200 having an accommodation portion 210 in which an electrode assembly 110 is mounted, and a sealing portion 250 formed by sealing an outer periphery thereof; an electrode lead 300 electrically connected to an electrode tab 150 included in the electrode assembly 110 and protruding out of the battery case 200 via the sealing portion 250; and a lead film 400 located at a portion corresponding to the sealing portion 250 in at least one of an upper portion and a lower portion of the electrode lead 300. For example, the battery cell 100 has a long side in a direction along the X-axis and a short side in a direction along the Y-axis, and also has a small thickness in the Z-axis direction compared to the length of the X-axis or Y-axis, so that it may be an approximately rectangular plate-shaped cell. The electrode lead 300 may be formed at the short side of the battery cell 100. Such battery cells 100 are integrated in the Z-axis direction to stack several battery cells 100 face-to-face, which is an efficient structure to increase energy density.

The battery case 200 may be a laminate sheet including a resin layer and a metal layer. More specifically, the battery case 200 may be made of a laminate sheet, and may include an outer resin layer forming the outermost layer, a barrier metal layer preventing penetration of materials, and an inner resin layer for sealing.

The electrode assembly 110 may have a structure of a jelly-roll type (winding type), a stack type (lamination type), or a composite type (stack/folding type). More specifically, the electrode assembly 110 may include a positive electrode, a negative electrode, and a separator disposed therebetween.

The electrode lead 300 is electrically connected to an electrode tab 150 included in the electrode assembly 110, and protrudes out of the battery case 200 via the sealing portion 250. In addition, the lead film 400 is located at a portion corresponding to the sealing portion 250 in at least one of an upper portion and a lower portion of the electrode lead 300. Accordingly, the lead film 400 may improve the sealing properties of the sealing portion 250 and the electrode lead 300 while preventing a short circuit from occurring in the electrode lead 300 during thermal fusion or press fusion together with the sealing portion 250.

Referring to FIG. 3, the lead film 400 may have a wider width than the electrode lead 300. Here, the width of the lead film 400 means a maximum value of the distance between one end and the other end of the lead film 400 in a direction (Y-axis direction) orthogonal to the protruding direction (X-axis direction) of the electrode lead 300, and the width of the electrode lead 300 means a maximum value of the distance between one end and the other end of the electrode lead 300 in a direction orthogonal to the protruding direction of the electrode lead 300.

The lead film 400 may have a length greater than the length of the sealing portion 250 based on the protruding direction of the electrode lead 300 and have a length smaller than the length of the electrode lead 300. Here, the length of the lead film 400 means a maximum value of the distance between one end and the other end of the lead film 400 in the protruding direction of the electrode lead 300. The length of the sealing portion 250 means a maximum value of the distance between one end and the other end of the sealing portion 250 in the protruding direction of the electrode lead 300. The length of the electrode lead 300 means a maximum value of the distance between one end and the other end of the electrode lead 300 in the protruding direction of the electrode lead 300. Accordingly, the lead film 400 may prevent the side surface of the electrode lead 300 from being exposed to the outside without interfering with the electrical connection of the electrode lead 300.

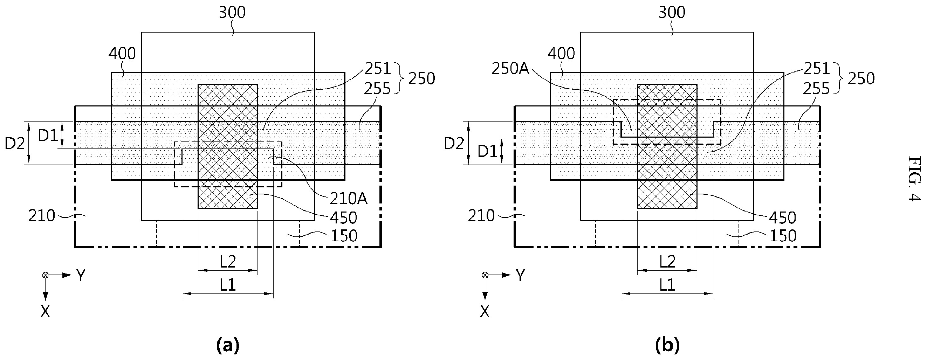

FIG. 4(a) is an enlarged view showing a two-dot chain line region of FIG. 3, and FIG. 4(b) is an enlarged view showing the two-dot chain line region of FIG. 3 according to another embodiment of the present disclosure.

Referring to FIGS. 3 and 4, the gas discharge guiding unit 450 is inserted in the lead film 400, and the sealing portion 250 includes a first sealing portion 251 located on the gas discharge guiding unit 450 and a second sealing portion 255 located at both sides of the first sealing portion 251. In other words, the second sealing portion 255 may be located in a portion where the gas discharge guiding unit 450 is not located. More specifically, the first sealing portion 251 and the second sealing portion 255 may be integrated with each other.

Also, referring to FIG. 4, based on the protruding direction of the electrode lead 300, the width D1 of the first sealing portion 251 may be smaller than the width D2 of the second sealing portion 255. Here, the width of the first sealing portion 251 means a maximum value of the distance between one end and the other end of the first sealing portion 251 in the protruding direction of the electrode lead 300. The width of the second sealing portion 255 means a maximum value of the distance between one end and the other end of the second sealing portion 255 in the protruding direction of the electrode lead 300. More specifically, the width D1 of the surface of the first sealing portion 251 in contact with the lead film 400 may be smaller than the width D2 of the surface of the second sealing portion 255 in contact with the lead film 400. That is, based on the protruding direction of the electrode lead 300, at least a part of the portion of the lead film 400 where the gas discharge guiding unit 450 is located may not be covered by the first sealing portion 251.

Also, referring to FIG. 4, based on a direction perpendicular to the protruding direction of the electrode lead 300, the length L1 of the first sealing portion 251 may be greater than the length L2 of the gas discharge guiding unit 450. Here, the length of the first sealing portion 251 means a maximum value of the distance between one end and the other end of the first sealing portion 251 in a direction orthogonal to the protruding direction of the electrode lead 300. The length of the second sealing portion 255 means a maximum value of the distance between one end and the other end of the second sealing portion 255 in a direction orthogonal to the protruding direction of the electrode lead 300. In other words, based on a direction perpendicular to the protruding direction of the electrode lead 300, at least a part of the portion of the lead film 400 where the gas discharge guiding unit 450 is located may not be covered by the first sealing portion 251. More specifically, the gas discharge guiding unit 450 may be located in the center of the first sealing portion 251. However, the location of the gas discharge guiding unit 450 is not limited thereto, and any location may be included in this embodiment as long as it is positioned within the first sealing portion 251.

Here, the length of the first sealing portion 251 may be adjusted according to the degree of gas discharge of the gas discharge path, explained later, while maintaining the sealing property of the battery cell 100.

By the above configuration, in the battery cell 100 according to this embodiment, the width D1 of the first sealing portion 251 located on the gas discharge guiding unit 450 is relatively small based on the protruding direction of the electrode lead 300, so that at least a part of the lead film 400 positioned on the gas discharge guiding unit 450 may not be sealed by the first sealing portion 251. In other words, a portion of the lead film 400 that is not sealed by the first sealing portion 251 may be exposed.

That is, the portion of the lead film 400 not sealed by the first sealing portion 251 may lower the sealing strength of the sealing portion 250, so that when the internal pressure rises, the lead film 400 may be easily peeled off from the gas discharge guiding unit 450 by the internal pressure, and a gas discharge path may be easily formed between the gas discharge guiding unit 450 and the lead film 400.

In addition, as shown in FIG. 4, the first sealing portion 251 in the sealing portion 250 may have a recessed pattern based on the second sealing portion 255. For example, as shown in FIGS. 3 and 4(a), in the sealing portion 250, the first sealing portion 251 may have a pattern recessed toward the outer direction based on the inner side of the sealing portion 250. As another example, as shown in FIG. 4(b), in a direction opposite to the first sealing portion 251 formed in FIGS. 3 and 4(a), the first sealing portion 251 may have a pattern recessed toward the inner direction based on the outer side of the sealing portion 250. In this case, the sealing portion 250 may include a recessed portion 250A in the first sealing portion 251. In addition, as another example, as shown in FIGS. 4(a) and 4(b), in the sealing portion 250, the first sealing portion may have both a pattern recessed toward the outer direction based on the inner side of the sealing portion 250 and a pattern recessed in the inner direction based on the outer side of the sealing portion 250.

Accordingly, as described above, since the sealing portion 250 has a recessed pattern in the first sealing portion 251, unlike the second sealing portion 255, so that a portion that is not sealed by the first sealing portion 251 may be formed on the lead film 400. That is, by lowering the sealing strength between the lead film 400 and the sealing portion 250, when the internal pressure rises, the lead film 400 may be easily peeled off from the gas discharge guiding unit 450 by the internal pressure, and a gas discharge path may be easily formed between the gas discharge guiding unit 450 and the lead film 400.

More preferably, since the sealing portion 250 may have the pattern of the first sealing portion 251 as shown in FIG. 4(a), the portion of the lead film 400 not sealed by the first sealing portion 251 may be in direct contact with the internal gas when the internal pressure rises. That is, the lead film 400 may be more easily peeled off from the gas discharge guiding unit 450 by the internal pressure.

However, the pattern of the sealing portion 250 is not limited thereto, and any patter may be included in this embodiment as long as the pattern exposes a part of the lead film 400 located on the gas discharge guiding unit 450 since a part of the sealing portion 250 is not sealed.

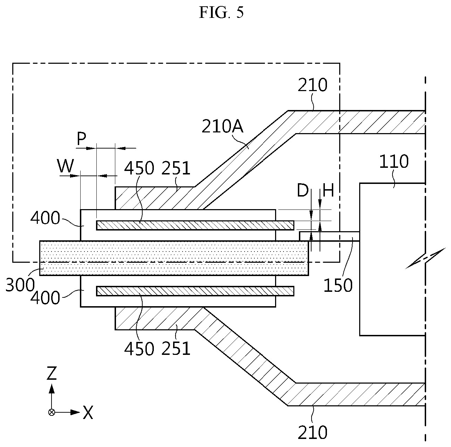

Hereinafter, the battery cell of FIG. 4(a) will be described. FIG. 5 is a cross-sectional view showing the battery cell of FIG. 4(a), taken along the axis A-A' of FIG. 3.

Also, referring to FIGS. 3, 4(a), and 5, the battery case 200 may further include an accommodation extending portion 210A. More specifically, in the battery case 200, the accommodation extending portion 210A may be located between the first sealing portion 251 and the accommodation portion 210. In other words, the accommodation extending portion 210A may be a region that extends in a direction in which the electrode lead 300 protrudes based on the accommodation portion 210 and is connected to the end of the first sealing portion 251.

Also, in the battery case 200, the end of the accommodation extending portion 210A may be located outer than the end of the accommodation portion 210 based on the outer side of the battery case 200. In other words, based on the inner side of the battery case 200, the end of the accommodation portion 210 is connected to the end of the second sealing portion 255, and the end of the accommodation extending portion 210A is connected to the end of the first sealing portion 251. In this case, based on the inner side of the battery case 200, the end of the first sealing portion 251 is located outer than the end of the second sealing portion 255, and thus the end of the accommodation extending portion 210A may be located outer than the end of the accommodation portion 210. In this case, based on the lead film 400, the angle at which the accommodation extending portion 210A is inclined may be smaller than the angle at which the accommodation portion 210 is inclined.

By the above configuration, since the battery cell 100 according to this embodiment includes the accommodation extending portion 210A having a relatively longer length than the length of the side surface of the accommodation portion 210, the lead film 400 may be peeled from the gas discharge guiding unit 450 by the internal pressure in the space between the lead film 400 and the accommodation extending portion 210A, and a gas discharge path may be easily formed between the gas discharge guiding unit 450 and the lead film 400.

Also, referring to FIGS. 4 and 5, the gas discharge guiding unit 450 may extend along the protruding direction of the electrode lead 300. More specifically, in the gas discharge guiding unit 450, an end of the gas discharge guiding unit 450 adjacent to the outer side of the battery case 200 may be surrounded with the lead film 400. In other words, the end of the gas discharge guiding unit 450 adjacent to the outer side of the battery case 200 may not be exposed out of the battery case 200.

In addition, an end of the gas discharge guiding unit 450 adjacent to the inner side of the battery case 200 may be exposed inside the battery case 200. In other words, the end of the gas discharge guiding unit 450 adjacent to the inner side of the battery case 200 may be located on the same vertical line as the end of the lead film 400, or may be located at the inner side the battery case 200 compared to the end of the lead film 400.

Accordingly, in the lead film 400, since one end of the gas discharge guiding unit 450 adjacent to the outer side of the battery case 200 is not exposed out of the battery case 200, the sealing force of the battery case 200 by the lead film 400 and the sealing portion 250 may be improved. In addition, in the lead film 400, since the end of the gas discharge guiding unit 450 adjacent to the inner side of the battery case 200 is exposed inside the battery case 200, the gas generated in the battery cell 100 may be easily introduced along the gas discharge path formed by the gas discharge guiding unit 450 and may be effectively discharged to the outside.

Referring to FIG. 5 further, the thickness H (height in the Z-axis directions) of the lead film 400 on the upper surface of the gas discharge guiding unit 450 may be 100 µm to 300 µm, or 100 µm to 200 µm. When the thickness H of the lead film 400 satisfies the above range, the gas inside the battery case 200 may be more easily discharged to the outside.

Also, referring to FIG. 5, based on the protruding direction of the electrode lead 300, the width W of the lead film 400 surrounding the front surface of the gas discharge guiding unit 450 may be 2 mm or more, or 2 mm to 3 mm. When the width W of the lead film 400 satisfies the above range, the lead film 400 may not be torn as much as possible while the gas generated inside the battery case 200 is discharged to the outside.

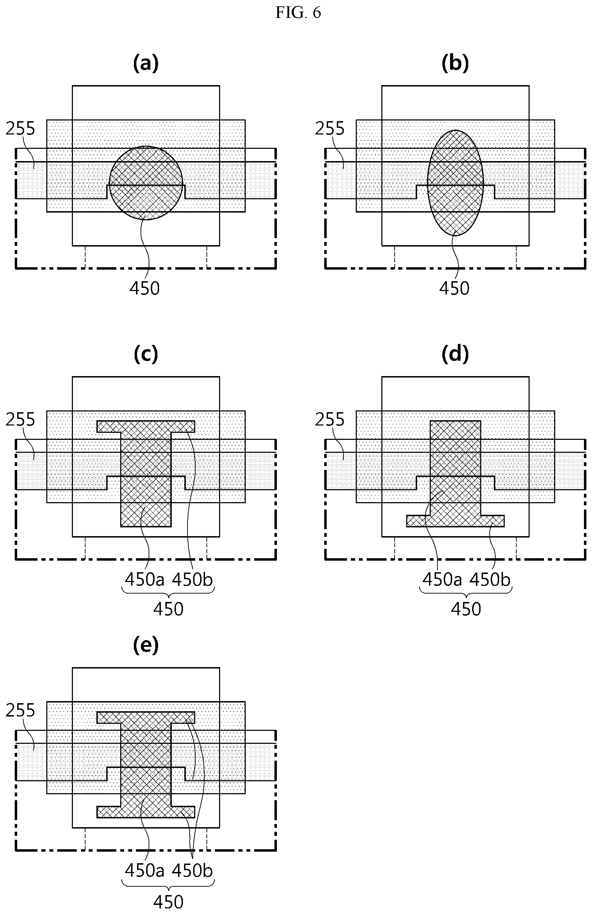

In addition, the gas discharge guiding unit 450 may have a thickness D of 50 µm to 150 µm. When the thickness of the gas discharge guiding unit 450 satisfies the above range, the gas inside the battery case 200 may be more easily discharged to the outside. FIG. 6 shows various shapes of the gas discharge guiding unit. The gas discharge guiding unit 450 may be formed in a predetermined pattern to discharge gas inside the battery case 200.

For example, the gas discharge guiding unit 450 may have a rectangular shape extending along the protruding direction of the electrode lead 300 as shown in FIG. 4. However, the present disclosure is not limited thereto, and the gas discharge guiding unit 450 may have various shapes such as a circular shape as shown in (a) of FIG. 6, an elliptical shape as shown in (b) FIG. 6, and other linear or curved shapes.

As another example, the gas discharge guiding unit 450 may include a first gas discharge guiding unit 450a along the protruding direction of the electrode lead 300 and a second gas discharge guiding unit 450b extending in a direction perpendicular to the protruding direction of the electrode lead 300 as shown in (c) FIG. 6. In particular, the first gas discharge guiding unit 450a and the second gas discharge guiding unit 450b may be connected to each other. Here, the second gas discharge guiding unit 450b may be located at the outside of the sealing portion 250 and the inside of the lead film 400 based on the sealing portion 250 as shown in (c) of FIG. 6, or may be located at the inside of the sealing portion 250 and the outside of the lead film 400 based on the sealing portion 250 as shown in (d) of FIG. 6. Alternatively, the second gas discharge guiding unit 450b may be located both at the outside of the lead film 400 and at the inside of the lead film 400 with respect to the sealing portion 250 as shown in (e) of FIG. 6. However, the shape of the gas discharge guiding unit 450 is not limited to the above, and the gas discharge guiding unit 450 may be inserted into the lead film 400 in an appropriate shape.

Accordingly, by adjusting the shape of the gas discharge guiding unit 450 inserted in the lead film 400, it is possible to control the gas discharge performance of the gas discharge guiding unit 450 and the durability and airtightness of the lead film 400. In addition, if necessary, by changing the shape of the gas discharge guiding unit 450, it is possible to simplify the manufacturing process and reduce the cost.

For example, only one gas discharge guiding unit 450 may be included in the lead film 400 as shown in FIG. 4. As another example, a plurality of gas discharge guiding units 450 may be inserted into the lead film 400 and be positioned to be spaced apart from each other.

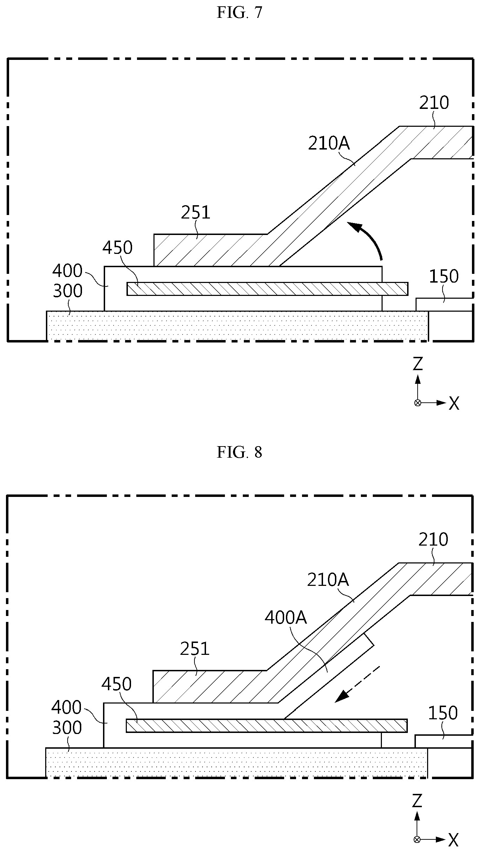

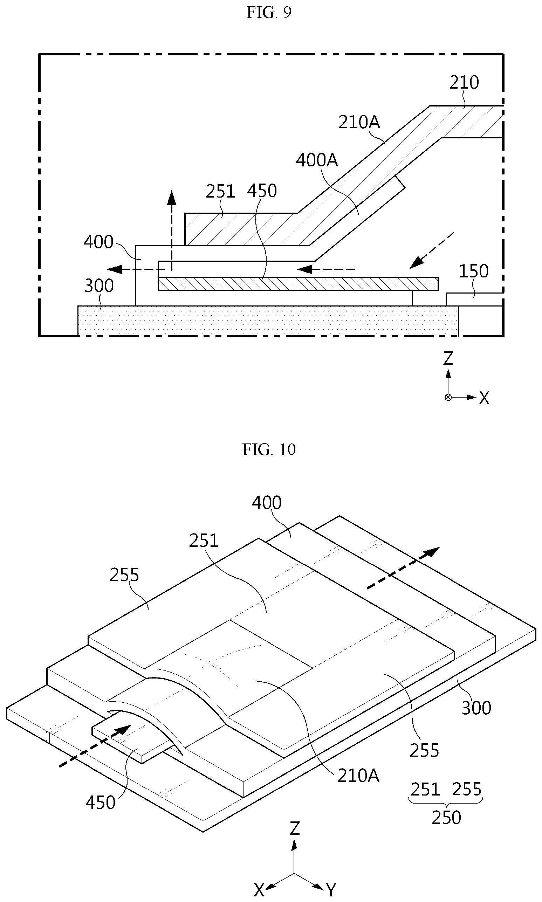

Accordingly, it is possible to control the gas discharge performance of the gas discharge guiding unit 450 and the durability and airtightness of the lead film 400 by adjusting the number of gas discharge guiding units 450 inserted in the lead film 400. In addition, if necessary, by minimizing the number of gas discharge guiding units 450, it is possible to simplify the manufacturing process and reduce the cost. FIG. 7 is an enlarged view showing a two-dot chain line region of FIG. 5. FIGS. 8 and 9 are diagrams showing a gas discharge path formed at an interface between a lead film and the gas discharge guiding unit of FIG. 7. FIG. 10 is a perspective view showing the gas discharge path of FIG. 9. In FIGS. 8 and 10, the movement path of the gas is indicated by a dotted arrow.

Referring to FIGS. 7 to 9, in this embodiment, a gas discharge path may be formed at the interface between the gas discharge guiding unit 450 and the lead film 400. More specifically, as shown in FIG. 7, the portion of the lead film 400 not sealed by the first sealing portion 251 may be pressurized by the internal gas when the internal pressure of the battery cell 100 rises. The portion of the lead film 400 not sealed by the first sealing portion 251 may be moved in the direction of the thick arrow in FIG. 7 even with a small internal pressure. Thereafter, as shown in FIG. 8, the interface of the lead film 400 and the gas discharge guiding unit 450 may be peeled, so that the peeled portion 400A of the lead film 400 may be located adjacent to the accommodation extending portion 210A.

Then, as additional pressure is applied to the interface of the peeled portion 400A of the lead film 400 and the gas discharge guiding unit 450, as shown in FIG. 9, at least a part of the interface between the lead film 400 and the gas discharge guiding unit 450 may be spaced apart. As above, the gas discharge path may mean a space in which at least a part of the interface between the gas discharge guiding unit 450 and the lead film 400 are spaced apart by the pressure of the gas generated in the battery case 200. That is, as shown in the dotted arrow direction of FIG. 9, the gas discharge path may mean a path through which gas is introduced into the space at the interface between the gas discharge guiding unit 450 and the lead film 400 or discharged to the outside.

Here, the adhesive force between the gas discharge guiding unit 450 and the lead film 400 may be smaller than the adhesive force between the lead film 400 and the electrode lead 300 or the adhesive force between the lead film 400 and the sealing portion 250. More specifically, when the pressure inside the battery case 200 is increased by the gas generated in the battery cell 100, the adhesive force of the interface between the gas discharge guiding unit 450 and the lead film 400 is relatively lower than the adhesive force between the lead film 400 and other components, so at least a part of the interface between the gas discharge guiding unit 450 and the lead film 400 may be spaced apart by the pressure of the gas generated in the battery cell 100 as shown in FIGS. 8 and 9.

That is, in this embodiment, as the gas discharge guiding unit 450 and the lead film 400 are spaced apart due to the relatively low adhesive force between the gas discharge guiding unit 450 and the lead film 400, the gas inside the battery cell 100 may be introduced into the gas discharge passage formed at the interface between the gas discharge guiding unit 450 and the lead film 400, and the gas may move along the gas discharge passage and be finally discharged through the lead film 400. The gas introduced into the gas discharge passage may be discharged to the outside according to the pressure difference with the outside.

Moreover, in this embodiment, since the lead film 400 located on the gas discharge guiding unit 450 includes a portion that is not sealed by the first sealing portion 251, as shown in FIG. 10, the lead film 400 may be easily peeled off from the gas discharge guiding unit 450 just with a relatively low internal pressure. That is, this embodiment has an advantage in that a gas discharge path may also be easily formed to improve the gas discharge performance further.

However, regarding the gas discharge path, only when the case where at least a part of the interface between the upper surface of the gas discharge guiding unit 450 and the lead film 400 is spaced apart as shown in FIG. 9, but also the case where at least a part of the interface between the lower surface of the gas discharge guiding unit 450 and the lead film 400 is spaced apart may be included in this embodiment. For example, the gas discharge guiding unit 450 may be a film layer made of at least one of polyimide (PI) and polyethylene terephthalate (PET). As another example, the gas discharge guiding unit 450 may be a coating layer made of liquid resin. However, the shape of the gas discharge guiding unit 450 or the material constituting the same is not limited thereto, and any shape or material that can be included in this embodiment as long as the adhesive force of the interface between the gas discharge guiding unit 450 and the lead film 400 can be relatively lowered than the adhesive force between the lead film 400 and other components.

Accordingly, since the battery cell according to this embodiment may form a gas discharge path at the interface between the gas discharge guiding unit 450 and the lead film 400 through a relatively low adhesive force between the gas discharge guiding unit 450 and the lead film 400, it is possible to effectively discharge the gas in the battery cell 100 to the outside while the manufacturing process is relatively easy.

Also, referring to FIGS. 4 and 5 again, one end of the gas discharge guiding unit 450 may be located inner than the inner surface of the sealing portion 250 based on the protruding direction of the electrode lead 300. In this specification, the inner surface of the sealing portion 250 means the end of the sealing portion 250 adjacent to the inside of the battery case 200, and one end of the gas discharge guiding unit 450 located inner than the inner surface of the sealing portion 250 means that one end of the gas discharge guiding unit 450 is located inner than the inner surface of the sealing portion 250 toward the inside of the battery case 200. When one end of the gas discharge guiding unit 450 is located inner than the inner surface of the sealing portion 250, it is not interfered with the sealing portion 250, so gas may be more easily introduced into the gas discharge guiding unit 450.

In addition, based on the protruding direction of the electrode lead 300, the other end of the gas discharge guiding unit 450 may be located outer than the outer surface of the sealing portion 250. In this specification, the outer surface of the sealing portion 250 means the end of the sealing portion 250 adjacent to the outside of the battery case 200, and the other end of the gas discharge guiding unit 450 located outer than the outer surface of the sealing portion 250 means that the other end of the gas discharge guiding unit 450 is located outer than the outer surface of the sealing portion 250 toward the outside of the battery case 200. For example, an interval P is placed between the outer surface of the sealing portion 250 and the other end of the gas discharge guiding unit 450. If the other end of the gas discharge guiding unit 450 is located outer than the outer surface of the sealing portion 250 as described above, the gas introduced into the gas discharge guiding unit 450 may be more easily discharged to the outside. For example, since the other end of the gas discharge guiding unit 450 is not interfered with the sealing portion 250, the gas introduced into the gas discharge guiding unit 450 may be more easily discharged to the outside.

Accordingly, the gas generated inside the battery cell 100 may be discharged toward the gas discharge guiding unit 450, and the gas introduced into the gas discharge guiding unit 450 may be easily discharged to the outside as shown in FIG. 9. In addition, the amount of gas generated inside the battery cell 100 and discharged to the outside may also be increased. In this way, the gas generated inside the battery case 200 may be easily discharged into the gas discharge guiding unit 450 and may be more easily discharged to the outside of the gas discharge guiding unit 450.

Moreover, as shown in FIG. 9, the gas introduced into the gas discharge guiding unit 450 may be particularly easily discharged along the Z-axis direction through the lead film 400 on the gas discharge guiding unit 450. For example, when the other end of the gas discharge guiding unit 450 is located outer than the outer surface of the sealing portion 250, the gas introduced into the gas discharge guiding unit 450 may be discharged along the Z-axis direction in the portion of the lead film 400 between the other end of the gas discharge guiding unit 450 and the outer surface of the sealing portion 250. As mentioned above, the thickness H of the lead film 400 on the upper surface of the gas discharge guiding unit 450 may be 100 µm to 300 µm, and based on the protruding direction of the electrode lead 300, the width W of the lead film 400 surrounding the front surface of the gas discharge guiding unit 450 may be 2 mm or more, or 2 mm to 3 mm. As described above, when the other end of the gas discharge guiding unit 450 is located outer than the outer surface of the sealing portion 250, the gas may be discharged through a portion placed in the Z-axis direction, which is a relatively thin portion of the lead film 400. Therefore, the gas may be discharged more easily. Moreover, if the gas discharge path is completely blocked by the sealing portion 250 when gas discharge occurs, the gas is not smoothly discharged. Thus, the interval P is placed between the outer surface of the sealing portion 250 and the other end of the gas discharge guiding unit 450 as described above, so that the gas may be smoothly discharged.

In addition, the gas discharge guiding unit 450 may further include a material having a function of absorbing or adsorbing moisture introduced from the outside or hydrofluoric acid generated therein. More specifically, the gas discharge guiding unit 450 may further include a getter material. Here, the getter material may refer to a material capable of evacuating using the action of gas adsorbed to a chemically activated metal film. For example, the getter material may include at least one of calcium oxide (CaO), lithium chloride (LiCl), silica (SiO₂), barium oxide (BaO), barium (Ba), and calcium (Ca). As another example, the getter material may have a structure of a metal organic framework (MOF). However, the getter material is not limited thereto, and all kinds of materials generally classified as getter materials may be included.

Accordingly, in this embodiment, since the gas discharge guiding unit 450 further includes a material capable of absorbing or adsorbing moisture or hydrofluoric acid, the gas discharge guiding unit 450 may minimize the penetration degree of moisture or hydrofluoric acid introduced into the battery cell 100 from the outside of the battery cell 100 more easily, and may more easily discharge the gas generated inside the battery cell 100 to the outside.

In an embodiment of the present disclosure, the gas permeability of the gas discharge guiding unit 450 may be greater than or equal to 40 Barrer at 60°C. For example, the carbon dioxide permeability of the gas discharge guiding unit 450 may satisfy the above range.

For example, the gas discharge guiding unit 450 may include at least one of a polyolefin-based material, a fluorine-based material, and a porous ceramic-based material that satisfies the above gas permeability value. The polyolefin-based material may include at least one material selected from the group consisting of polypropylene, polyethylene, and polyvinyl difluoride (PVDF). The fluorine-based material may include at least one material selected from the group consisting of polytetrafluoroethylene and polyvinylidene fluoride.

In one embodiment of the present disclosure, the gas permeability of the lead film 400 may be 20 Barrer to 60 Barrer, or 30 Barrer to 40 Barrer at 60°C. For example, the carbon dioxide permeability of the lead film 400 may satisfy the above range. In addition, the gas permeability may satisfy the above range at 60°C based on the thickness H of the lead film 400 of 200 µm. If the gas permeability of the lead film 400 satisfies the above range, the gas generated inside the battery cell may be more effectively discharged.

In this specification, the gas permeability may be measured by ASTM F2476-20.

In one embodiment of the present disclosure, the moisture penetration amount of the lead film 400 may be 0.02 g to 0.2 g, or 0.02 g to 0.04 g, or 0.06 g, or 0.15 g for 10 years at 25°C, 50 %RH. If the moisture penetration amount of the lead film 400 satisfies the above range, the penetration of moisture from the lead film 400 may be more effectively prevented.

In an embodiment of the present disclosure, the lead film 400 may have a gas permeability of 20 Barrer to 60 Barrer at 60°C and a moisture penetration amount of 0.02 g to 0.2 g at 25°C, 50%RH for 10 years. When the gas permeability and moisture penetration amount of the lead film 400 satisfy the above ranges, it may be more effective to prevent moisture penetration from the outside while discharging the gas generated inside the battery cell 100.

The moisture penetration amount of the lead film 400 may be measured by adopting the ASTM F 1249 method. At this time, the moisture penetration amount may be measured using equipment officially certified by MCOON.

In an embodiment of the present disclosure, the lead film 400 may be formed of an adhesive composition made of at least one of polyolefin-based material, epoxy, and polyvinyl chloride (PVC). The polyolefin-based material may be polyethylene (PE), polypropylene (PP), or the like. For example, the lead film 400 may be polyethylene, polypropylene, or the like, that satisfies the gas permeability and/or moisture penetration amount values described above.

In addition, since the lead film 400 is made of the above-described material, the lead film 400 may maintain the airtightness of the battery cell 100 and prevent leakage of the internal electrolytic solution.

Hereinafter, a battery cell according to another embodiment of the present disclosure will be described. However, the battery cell according to this embodiment may be described mostly in the same way as the battery cell 100 described above, and the gas discharge guiding unit 450 inserted in the lead film 400 will be described in detail based the part that is different from the battery cell 100.

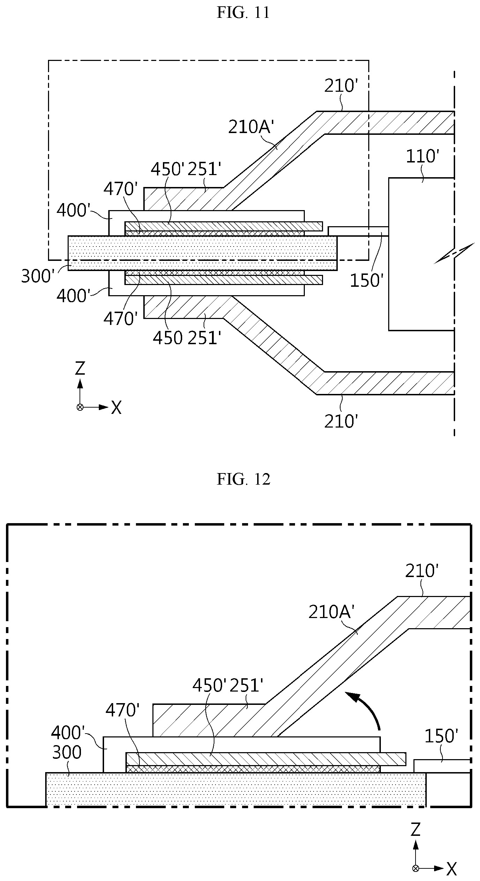

FIG. 11 is a cross-sectional view showing a battery cell according to another embodiment of the present disclosure, taken along the A-A' axis of FIG. 3.

Referring to FIGS. 3 and 11, in this embodiment, unlike FIG. 5, the gas discharge guiding unit 450' may be located on the electrode lead 300'. More specifically, a separate lead film 400' may not be positioned between the gas discharge guiding unit 450' and the electrode lead 300'. That is, the gas discharge guiding unit 450' may be inserted into of the lead film 400' adjacent to the electrode lead 300', and may be positioned adjacent to the electrode lead 300'. In other words, this embodiment may have a structure in which the lead film 400' surrounds the outer surface of the gas discharge guiding unit 450' after the gas discharge guiding unit 450' is attached or fixed on the electrode lead 300'.

Accordingly, as the gas discharge guiding unit 450' is positioned adjacent to the electrode lead 300', the thickness of the lead film 400' surrounding the gas discharge guiding unit 450' may also be relatively reduced, there is an advantage of reducing the manufacturing cost and simplifying the manufacturing process.

In addition, an adhesive layer 470' may be formed between the gas discharge guiding unit 450' and the electrode lead 300'. Here, the adhesive layer 470' may extend along the interface between the gas discharge guiding unit 450' and the electrode lead 300'. At this time, the adhesive layer 470' may be formed on the entire or part of the interface between the gas discharge guiding unit 450' and the electrode lead 300'.

For example, the adhesive layer 470' may be made of an adhesive tape or an adhesive binder. However, the present disclosure is not limited thereto, and any material having an adhesive performance capable of fixing the gas discharge guiding unit 450' and the electrode lead 300' to each other may be applied without limitation.

Accordingly, the gas discharge guiding unit 450' may be stably fixed to the electrode lead 300' by the adhesive layer 470'. That is, since the adhesive layer 470' having a relatively high adhesive force is formed between the gas discharge guiding unit 450' and the electrode lead 300', it is possible to prevent peeling caused by an increase in the internal pressure of the battery cell 100, and the sealing strength of the battery cell 100 may also be further improved.

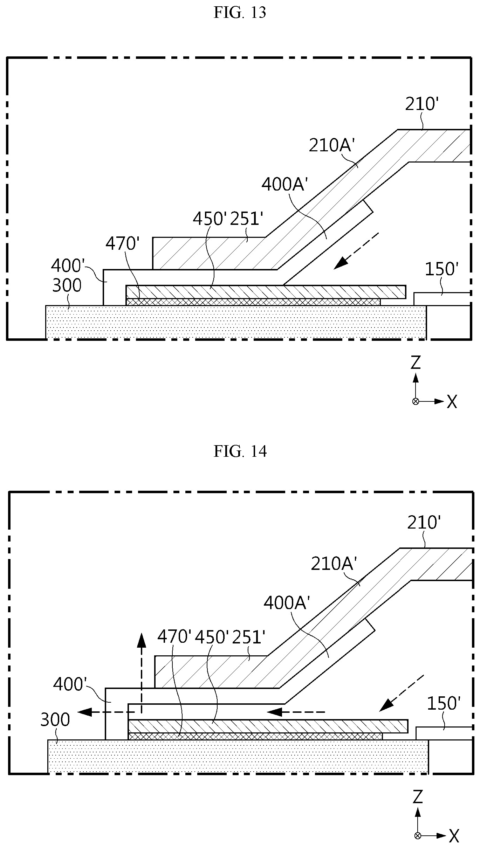

FIG. 12 is an enlarged view showing a two-dot chain line region of FIG. 11. FIGS. 13 and 14 are diagrams showing a gas discharge path formed at the interface between the lead film and the gas discharge guiding unit of FIG. 12. In FIGS. 13 and 14, the movement path of the gas is indicated by dotted arrows.

Referring to FIGS. 12 to 14, in this embodiment, similarly to FIGS. 7 to 10, a gas discharge path may be formed at the interface between the gas discharge guiding unit 450' and the lead film 400'. However, in this embodiment, unlike FIGS. 7 to 10, the gas discharge guiding unit 450' is located adjacent to the electrode lead 300', and an adhesive layer 470' is formed between the gas discharge guiding unit 450' and the electrode lead 300'. Thus, a gas discharge path may not be formed at the interface between the gas discharge guiding unit 450' and the electrode lead 300'.

More specifically, in this embodiment, the adhesive force between the gas discharge guiding unit 450' and the lead film 400' may be smaller than the adhesive force between the adhesive layer 470' and the gas discharge guiding unit 450' and/or the adhesive force between the adhesive layer 470' and the electrode lead 300'.

More specifically, in this embodiment, when the pressure inside the battery cell 100 increases, the adhesive force of the interface between the gas discharge guiding unit 450' and the lead film 400' is relatively smaller than the adhesive force between the lead film 400' and other components, so that the portion of the lead film 400 that is not sealed by the first sealing portion 251 may move along the thick arrow direction of FIG. 12 just by a small internal pressure. Thus, as shown in FIG. 13, at least a part of the interface between the gas discharge guiding unit 450' and the lead film 400' may be spaced apart by the internal pressure of the battery cell 100.

Moreover, in this embodiment, the adhesive force of the interface between the gas discharge guiding unit 450' and the lead film 400' may be smaller than the adhesive force between the gas discharge guiding unit 450' and the adhesive layer 470' and/or the adhesive force between the adhesive layer 470' and the electrode lead 300'. Thus, it is possible to prevent the interface between the gas discharge guiding unit 450' and the electrode lead 300' from being peeled off when the internal pressure of the battery cell 100 is increased.

That is, in this embodiment, since only the interface between the gas discharge guiding unit 450' and the lead film 400' may be peeled off to form a gas discharge path, it is possible to increase the sealing strength of the battery cell 100 while maintaining the gas discharge performance by the gas discharge path. In addition, according to the high sealing strength, the vent pressure when the gas generated in the battery cell 100 is discharged to the outside may also be higher, and safety may also be further improved.

Moreover, in this embodiment, due to not only the peeled portion 400A' of the lead film 400 but also the high adhesive force between the gas discharge guiding unit 450' and the adhesive layer 470' and/or between the adhesive layer 470' and the electrode lead 300', the interface between the lead film 400' and the gas discharge guiding unit 450' may be more easily peeled off even at a relatively low internal pressure. That is, in this embodiment, since the gas discharge path may also be formed more easily, there is an advantage that the gas discharge performance may also be further improved. Hereinafter, a battery cell according to a comparative example of the present disclosure will be described in detail. The comparative example will be described in comparison with the embodiments according to FIGS. 3 to 10, but it may also be also described in comparison with the embodiment according to FIGS. 11 to 14.

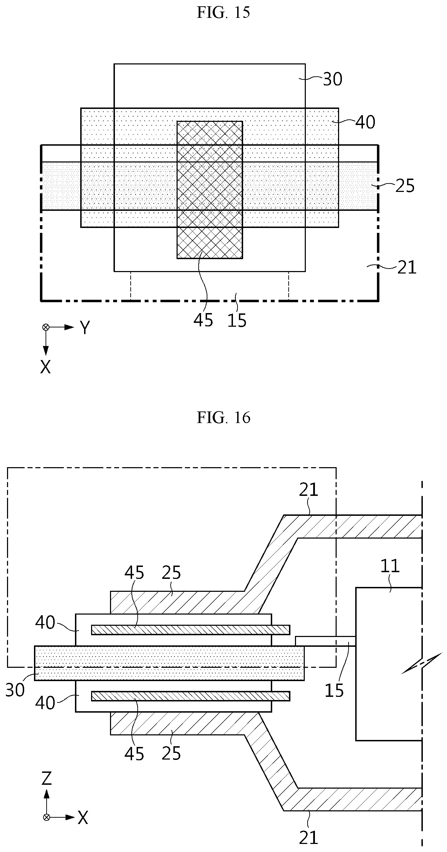

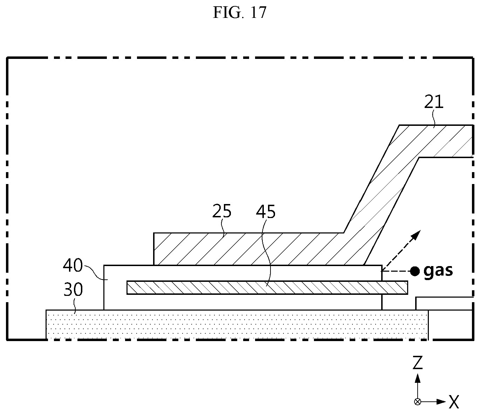

FIG. 15 is an enlarged view showing the two-dot chain line region of FIG. 1 according to a comparative example. FIG. 16 is a cross-sectional view, taken along the a-a' axis of FIG. 1 according to a comparative example. FIG. 17 is an enlarged view showing the two-dot chain line region of FIG. 16.

Referring to FIGS. 15 to 17, they relate to a battery cell 10 according to a comparative example, and the battery cell 10 of the comparative example is substantially identical to the battery cell of FIGS. 1 and 2, except that a gas discharge guiding unit 45 is included. Hereinafter, the gas discharge guiding unit 45 will be described in detail.

Referring to FIGS. 15 and 17, the battery cell 10 according to the comparative example includes a sealing portion 25 formed on the lead film 40 where the gas discharge guiding unit 45 is located, and unlike FIGS. 3 to 10, regardless of the position of the sealing portion 25, the width of the sealing portion 25 is formed uniformly. Accordingly, all lead films 40 positioned on the gas discharge guiding unit 45 may be sealed by the sealing portion 25.

Referring to FIG. 17, in the battery cell 10 according to the comparative example, as described above, since all lead films 40 positioned on the gas discharge guiding unit 45 are sealed by the sealing portion 25 as described above, at a relatively low internal pressure, the interface between the lead film 40 and the gas discharge guiding unit 45 may not be easily peeled by the gas inside the battery cell 10. That is, in the battery cell 10 according to the comparative example, in order to form a gas discharge path in the interface between the lead film 40 and the gas discharge guiding unit 45, a relatively high internal pressure may be required, and accordingly, the gas discharge performance and safety of the battery cell 10 may be degraded.

On the contrary, referring to FIGS. 3 to 10, in the battery cell 100 according to the embodiment of the present disclosure, since the width D1 of the first sealing portion 251 located on the gas discharge guiding unit 450 is smaller than the width D2 of the second sealing portion 255, the lead film 400 positioned on the gas discharge guiding unit 450 includes a portion not sealed by the first sealing portion 251. That is, unlike the comparative example, in the embodiment of the present disclosure, the portion of the lead film 400 not sealed by the first sealing portion 251 is in direct contact with the gas inside the battery cell 100, and thus the lead film 400 may be easily peeled off from the gas discharge guiding unit 450 even at a relatively low internal pressure. That is, in this embodiment, since the gas discharge path may be formed more easily, there is an advantage in that the gas discharge performance may also be further improved.

A battery module according to another embodiment of the present disclosure includes the battery cell described above. Meanwhile, one or more battery modules according to this embodiment may be packaged in a pack case to form a battery pack.

The battery module described above and the battery pack including the same may be applied to various devices. These devices may be transportation means such as electric bicycles, electric vehicles, hybrid electric vehicles, and the like, but the present disclosure is not limited thereto, and the present disclosure may be applied various devices that can use a battery module and a battery pack including the same, which is also within the scope of the right of the present disclosure.

Although the preferred embodiment of the present disclosure has been described in detail above, the scope of the right of the present disclosure is not limited thereto, and various modifications and improvements made by those skilled in the art using the basic concept of the present disclosure defined in the appended claims also fall within the scope of the right of the present disclosure.

### Reference Signs

100: battery cell
110: electrode assembly
200: battery case
210: accommodation portion
250: sealing portion
300: electrode lead
400: lead film
450: gas discharge guiding unit

### ITEMS:

1. A battery cell, comprising:
   a battery case having an accommodation portion in which an electrode assembly is mounted, and a sealing portion formed by sealing an outer periphery thereof;
   an electrode lead electrically connected to an electrode tab included in the electrode assembly and protruding out of the battery case via the sealing portion; and
   a lead film located at a portion corresponding to the sealing portion in at least one of an upper portion and a lower portion of the electrode lead,
   wherein a gas discharge guiding unit is inserted in the lead film,
   the sealing portion includes a first sealing portion located on the gas discharge guiding unit and a second sealing portion located at both sides of the first sealing portion, and
   based on a protruding direction of the electrode lead, a width of the first sealing portion is smaller than a width of the second sealing portion.
2. The battery cell according to item 1,
   wherein based on a direction perpendicular to the protruding direction of the electrode lead, a length of the first sealing portion is greater than a length of the gas discharge guiding unit.
3. The battery cell according to item 2,
   wherein the gas discharge guiding unit is located at a center of the first sealing portion.
4. The battery cell according to item 1,
   wherein the first sealing portion has a recessed pattern based on the second sealing portion.
5. The battery cell according to item 4,
   wherein the first sealing portion has a pattern recessed toward an outer direction based on an inner side of the sealing portion.
6. The battery cell according to item 5,
   wherein an accommodation extending portion is located between the first sealing portion and the accommodation portion.
7. The battery cell according to item 6,
   wherein based on an outer side of the battery case, an end of the accommodation extending portion is located outer than an end of the accommodation portion.
8. The battery cell according to item 1,
   wherein the gas discharge guiding unit extends along the protruding direction of the electrode lead, and an end of the gas discharge guiding unit adjacent to an outer side of the battery case is surrounded with the lead film.
9. The battery cell according to item 8,
   wherein an end of the gas discharge guiding unit adjacent to an inner side of the battery case is exposed inside the battery case.
10. The battery cell according to item 1,
   wherein a gas discharge path is formed at an interface between the gas discharge guiding unit and the lead film.
11. The battery cell according to item 10,
   wherein an adhesive force between the gas discharge guiding unit and the lead film is smaller than an adhesive force between the lead film and the electrode lead or an adhesive force between the lead film and the sealing portion.
12. The battery cell according to item 11,
   wherein the gas discharge guiding unit is a film layer made of at least one of polyimide and polyethylene terephthalate.
13. The battery cell according to item 11,
   wherein the gas discharge guiding unit is a coating layer made of liquid resin.
14. The battery cell according to item 11,
   wherein the gas discharge guiding unit further includes a getter material containing at least one of calcium oxide (CaO), lithium chloride (LiCl), silica (SiO₂), barium oxide (BaO), barium (Ba), and calcium (Ca).
15. The battery cell according to item 1,
   wherein the gas discharge guiding unit is located on the electrode lead, and an adhesive layer is formed between the gas discharge guiding unit and the electrode lead.
16. The battery cell according to item 15,
   wherein an adhesive force between the gas discharge guiding unit and the lead film is smaller than at least one of an adhesive force between the adhesive layer and the gas discharge guiding unit and an adhesive force between the adhesive layer and the electrode lead.
17. The battery cell according to item 15,
   wherein the adhesive layer is made of an adhesive tape or an adhesive binder.
18. The battery cell according to item 1,
   wherein the lead film has gas permeability of 20 Barrer to 60 Barrer at 60°C.
19. The battery cell according to item 1,
   wherein the lead film has a moisture penetration amount of 0.02 g to 0.2 g for 10 years at 25°C, 50 %RH.
20. The battery cell according to item 1,
   wherein the gas discharge guiding unit has gas permeability of 40 Barrer or more at 60°C.
21. A battery module, comprising the battery cell according to item 1.

## Claims

1. A battery cell, comprising:
a battery case having an accommodation portion in which an electrode assembly is mounted, and a sealing portion formed by sealing an outer periphery thereof;
an electrode lead electrically connected to an electrode tab included in the electrode assembly and protruding out of the battery case via the sealing portion; and
a lead film located at a portion corresponding to the sealing portion in at least one of an upper portion and a lower portion of the electrode lead,
wherein a gas discharge guiding unit is inserted in the lead film,
the sealing portion includes a first sealing portion located on the gas discharge guiding unit and a second sealing portion located at both sides of the first sealing portion, and
based on a protruding direction of the electrode lead, a width of the first sealing portion is smaller than a width of the second sealing portion, and
gas inside the battery case is discharged through the lead film to an outside of the battery case.

2. The battery cell according to claim 1,
wherein based on a direction perpendicular to the protruding direction of the electrode lead, a length of the first sealing portion is greater than a length of the gas discharge guiding unit.

3. The battery cell according to claim 1,
wherein the first sealing portion has a recessed pattern based on the second sealing portion and the first sealing portion has a pattern recessed toward an outer direction based on an inner side of the sealing portion.

4. The battery cell according to claim 1,
wherein an accommodation extending portion is located between the first sealing portion and the accommodation portion.

5. The battery cell according to claim 4,
wherein based on an outer side of the battery case, an end of the accommodation extending portion is located outer than an end of the accommodation portion.

6. The battery cell according to claim 4,
wherein, in a space between the lead film and the accommodation extending portion, the lead film is peeled off from the gas discharge guiding unit by a gas pressure inside the battery case.

7. The battery cell according to claim 4, wherein a portion of the lead film that is not sealed by the first sealing portion is exposed, the portion of the lead film not sealed by the first sealing portion is pressurized by a gas pressure inside the battery case, so that an interface between the lead film and the gas discharge guiding unit is peeled, and a peeled portion of the lead film is located adjacent to the accommodation extending portion.

8. The battery cell according to claim 1,
wherein the gas discharge guiding unit extends along the protruding direction of the electrode lead, and an end of the gas discharge guiding unit adjacent to an outer side of the battery case is surrounded with the lead film.

9. The battery cell according to claim 8,
wherein an end of the gas discharge guiding unit adjacent to an inner side of the battery case is exposed inside the battery case.

10. The battery cell according to claim 9, wherein the other end of the gas discharge guiding unit is located outer than an outer surface of the sealing portion, and the gas introduced into the gas discharge guiding unit is discharged in a portion of the lead film between the other end of the gas discharge guiding unit and the outer surface of the sealing portion, along a direction perpendicular to the protruding direction of the electrode lead.

11. The battery cell according to claim 1,
wherein a gas discharge path is formed at an interface between the gas discharge guiding unit and the lead film.

12. The battery cell according to claim 11,
wherein an adhesive force between the gas discharge guiding unit and the lead film is smaller than an adhesive force between the lead film and the electrode lead or an adhesive force between the lead film and the sealing portion.

13. The battery cell according to claim 11, wherein the gas discharge path is a space in which at least a part of the interface between the gas discharge guiding unit and the lead film are spaced apart from each other by a pressure of gas inside the battery case.

14. The battery cell according to claim 1,
wherein the lead film has gas permeability of 20 Barrer to 60 Barrer at 60°C.

15. A battery module, comprising the battery cell according to claim 1.
